(19) Europäisches Patentamt

European Patent Office

Office européen des brevets

(11) EP 1 549 102 A2

(12) EUROPEAN PATENT APPLICATION

(43) Date of publication:
29.06.2005 Bulletin 2005/26

(51) Int Cl.$^7$: H04Q 11/00, H04Q 3/68

(21) Application number: 04029621.2

(22) Date of filing: 15.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 24.12.2003 US 745872

(71) Applicant: ALCATEL
75008 Paris (FR)

(72) Inventors:
• Yang, Yuanyuan
East Setauket, NY 11733 (US)
• Zheng, Siqing
Plano, TX 75025 (US)
• Verchere, Dominique
91650 Breuillet (FR)

(74) Representative: Schäfer, Wolfgang, Dipl.-Ing.
Dreiss, Fuhlendorf, Steimle & Becker
Postfach 10 37 62
70032 Stuttgart (DE)

(54) **Method and apparatus for performing group switching in dense wavelength division multiplexing optical networks**

(57) Method and apparatus for performing group switching in DWDM optical networks are described. One embodiment is an $NxN$ three-stage group connector with $N$ inputs and $N$ outputs, wherein the $N$ outputs are divided into r output groups, each group including n outputs such that $r = N/n$. The group connector comprises a first stage comprising $r$ $nxm$ crossbar switch modules, wherein $m \geq n-1$; a second stage comprising $m$ $rxr$ crossbar switch modules; and a third stage comprising $r$ $MxN$ concentrator switch modules.

FIG. 1

**Description**

BACKGROUND OF THE INVENTION

Technical Field of the Invention

The present invention generally relates to Wavelength Division Multiplexing ("DWDM") optical networks. More particularly, and not by way of any limitation, the present invention is directed to group switching method and apparatus for such networks.

Description of Related Art

The laying of new fiber was once the only way to cope with fiber exhaust in optical telecommunications networks. In addition to being labor- and cost-intensive, this "solution" did not enable network operators to provide additional services to customers. In the early 1980s, time-domain multiplexing ("TDM") technology enabled an increase in the bit rate of optical telecommunications networks. With TDM, the capacity of a single fiber was increased by dividing time into small intervals and multiplexing the various signals onto these separate time intervals.

In TDM systems, each optical fiber is capable of transporting an optical signal from a single laser. The optical signal is converted into an electrical signal, electrically reshaped, retimed, and reamplified ("3R regenerated"), and finally transformed back into an optical signal, resulting in additional losses. Wavelength-division multiplexing ("WDM") networks, which enabled the simultaneous transmission of multiple signals of different wavelengths over a single fiber, were deployed in the late 1980s and proved in many cases to be a preferable alternative to TDM.

During the 1990s, WDM networks were developed that enabled up to four different signals to be transmitted over one fiber at different wavelengths within the same optical window. For obvious reasons, such networks necessitate the use of narrow lasers.

In order to increase the number of services that can be provided, the channel spaces can be moved closer together, creating Dense WDM ("DWDM"). This technology economically increases transport capacity through the utilization of existing fiber routes and terminal equipment.

A DWDM system can be described as a parallel set of optical channels each using a slightly different wavelength, but all sharing a single transmission medium or fiber. In a typical embodiment, various signals are fed to optical transmission modules. The optical output signals are converted to defined wavelengths within a 1550 nanometer ("nm") window via wavelength transponders. An optical DWDM coupler then multiplexes these optical signals onto a single fiber and forwards them to an optical fiber amplifier ("OFA").

Every router in a DWDM network must provide a switching function between $N$ inputs thereto and $N$ outputs therefrom such that simultaneous one-to-one connections between *the $N$* inputs and any one of the $N$ outputs. Note that a group connector is able to distinguish among groups of outputs. Clearly, an $N$ x $N$ permutation network, such as a Benes or Clos network, can be used to provide the switching function; however, such permutation networks can be costly in terms of hardware.

SUMMARY OF THE INVENTION

One embodiment is an $N$x$N$ three-stage group connector with $N$ inputs and $N$ outputs, wherein the $N$ outputs are divided into r output groups, each group including $n$ outputs such that $r = N/n$. The group connector comprises a first stage comprising *r nxm* crossbar switch modules, wherein $m \geq$ n-1; a second stage comprising *m rxr* crossbar switch modules; and a third stage comprising *r MxN* concentrator switch modules.

Another embodiment is a method of constructing an $N_1$x$N_2$ multistage group connector with $N_1$ inputs and $N_2$ outputs from a three-stage group connector, wherein the three-stage group connector comprises a first stage comprising *r nxm* crossbar switch modules, a second stage comprising *m rxr* crossbar switch modules, and a third stage comprising *r mxn* concentrator switch modules. The method comprises replacing each of the *r rxm* crossbar switch modules of the first stage with a three-stage group connector of the same size as the *rxm* crossbar switch module; and replacing each of the *m rxr* crossbar switch modules of the second stage with a three-stage group connector of the same size as the *rxr* crossbar switch module.

Another embodiment is an $N$x$N$ multi-stage group connector with $N$ inputs and $N$ outputs, wherein the $N$ outputs are divided into r output groups, each group including $n$ outputs such that $r = N/n$. The group connector comprises a first portion comprising *r nxm* three-stage group connectors, wherein $m \geq$ n-1; a second portion comprising *m rxr* three-stage group connectors; and a third portion comprising *r pxq* fat and slim concentrator switch modules.

Another embodiment is an $N$x$N$ two-stage group connector with $N$ inputs and $N$ outputs, wherein the $N$ outputs are divided into r output groups, each group including $n$ outputs such that $r = N/n$. The group connector comprises a first stage comprising $r$ $nxm$ crossbar switch modules; and a second stage comprising $m$ $rxr$ crossbar switch modules, wherein $m$ is equal to $2n$-1.

Another embodiment is a method of constructing an $N$ x $N$ group connector of group size $2^k$ from an $N$ x $N$ Benes network. The method comprises setting all switches in stages $2m$-2, $2m$-3, ... $2m$-($k$+1) of the Benes network to straight connections; and removing all switches in stages $2m$-2, $2m$-3, ... $2m$-($k$+1) of the Benes network.

BRIEF DESCRIPTION OF THE DRAWINGS

A more complete understanding of the present invention may be had by reference to the following Detailed Description when taken in conjunction with the accompanying drawings wherein:

FIG. 1 is a schematic block diagram of an ingress edge router of one embodiment;

FIG. 2A illustrates an embodiment of an optimal concentrator comprising a $p$ x $q$ fat-and-slim concentrator;

FIG. 2B illustrates an embodiment of an optimal concentrator comprising a $p$ x $q$ banded concentrator;

FIG. 3 is a schematic block diagram of an $N$ x $N$ three-stage group connector $g(m,n,r)$, where $N=nr$;

FIG. 4 illustrates an embodiment of a 9x4 fat-and-slim concentrator;

FIG. 5 is a schematic block diagram of a $N_1$ x $N_2$ three-stage group connector $v(m,n_1,r_1,n_2,r_2)$;

FIG. 6 is schematic block diagram of an $n$ x $n$ two-stage rearrangeably non-blocking group connector, where $N=nr$;

FIG. 7A illustrates an embodiment of a 16 x 16 Benes network; and

FIG. 7B illustrates construction of a 16 x 16 group connector of group size four from the Benes network of FIG. 7A.

DETAILED DESCRIPTION OF THE DRAWINGS

In the drawings, like or similar elements are designated with identical reference numerals throughout the several views thereof, and the various elements depicted are not necessarily drawn to scale.

A new class of interconnection networks called group connectors is introduced. A group connector $G(N,n)$ is a switching network that consists of $N$ inputs and $N$ outputs such that (1) its $N$ outputs are divided into $N/n$ groups with $n$ outputs in each group; and (2) it can provide any simultaneous one-to-one connections from the $N$ inputs to the $N$ outputs, possibly without the ability of distinguishing the order of the outputs within each group. Note that a group connector is able to distinguish among groups of outputs. Group connectors have application in the switching matrices in dense wavelength division multiplexing ("DWDM") networks. Clearly, an $N$ x $N$ permutation network can be used as an $N$ x $N$ group connector; however, as will be demonstrated hereinbelow, a group connector $G(N,n)$ can be built at a lower hardware cost than can a permutation network of the same size.

In general, a group connector $G(N,n)$ captures the simultaneous connections between $N$ clients and $N$ servers, which are divided into $N/n$ equal-size server groups such that the $n$ servers in each group are functionally equivalent. Group connectors are particularly useful in DWDM networks. With DWDM, it is possible to transmit different wavelengths of light over the same fiber. This development has provided another dimension to increasing bandwidth capacity. Suppose that an optical fiber link connecting two nodes transmits data using $n$ different wavelengths and an optical router has $N/n$ output links. Each wavelength on a link is called a channel. Then the channels on a link can be considered functionally equivalent and which wavelength to use for transmission along a link may only depend on the availability of these channels. A group connector can be used as a switching network in a DWDM router. For example, if some inputs and one or more groups of outputs are connected to a local node, a group connector can be used as an add/drop crossconnect switching matrix.

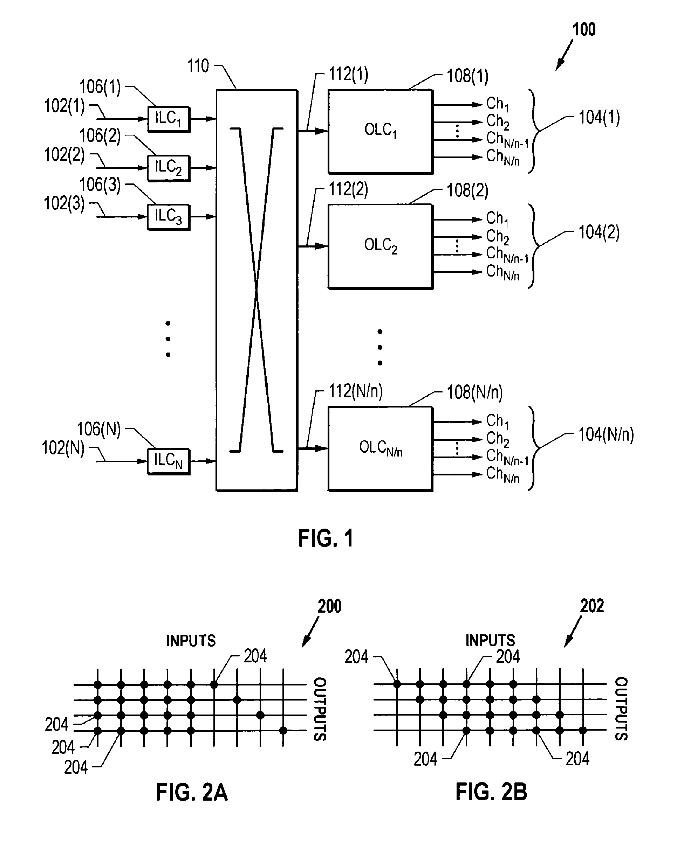

Group connectors also have application in the construction of ingress edge routers of DWDM networks. FIG. 1 is a block diagram of an ingress edge router 100 for a DWDM optical network. The ingress edge router 100 includes a set of $N$ electrical or optical input links 102(1)-102($N$) and a set of $N/n$ optical output links 104(1)-104($N/n$). Each optical output link 104(1)-104($N/n$) includes of a set of $n$ data channels $Ch_{i,1}, ... Ch_{i,n}$, each using a different wavelength. Associated with each input link 102(1)-102($N$) is a respective input line card ("ILC") 106(1)-106($N$). Similarly, associated with each output link 104(1)-104($N/n$) is a respective output line card ("OLC") 108(1)-108($N/n$). A switching matrix 110 is disposed between the set of ILCs 106(1)-106($N$) and the set of OLCs 108(1)-108($N/n$). The switching matrix 110 is individually connected to each of the OLCs 108(1)-108($N/n$) by connections 112(1)-112($n$).

The main function of each ILC 106 is to route each input packet to the appropriate OLC 108 via routing table lookup. Each OLC 108 transmits the packets it receives using the $n$ optical channels of the link 104(1)-104($N/n$) it controls. As will be described in greater detail below, a group connector can be used as the switching matrix (such as the switching matrix 110) in the design of an ingress edge router (such as the ingress edge router 100) of a burst-switched DWDM network.

**NON-BLOCKING GROUP CONNECTORS**

A group connector $G(N,n)$ is "non-blocking" if any of its $n$ inputs can be connected to a group at its output in a non-blocking fashion such that no rearrangement is required to the existing connections to the other groups in the network.

**Non-Blocking Three-Stage Group Connectors**

Group connector designs can utilize "concentrators" to reduce network cost. A $pxq$ ($p \leq q$) concentrator under consideration is a single stage sparse crossbar switching device that can connect any $q$ of its $p$ inputs to its $q$ outputs, possibly without the ability of distinguishing their order. Significant research has been performed with respect to designing efficient sparse crossbar concentrators. This research has shown that there is a lower bound on the number of crosspoints such a concentrator must have. In particular, it has been established that every $pxq$ sparse crossbar concentrator must contain at least $(p-q+1)xq$ crosspoints.

More recently, sparse crossbar concentrators that use $(p-q+1)xq$ crosspoints have been designed. Two 9x4 concentrators with a minimum number of crosspoints are illustrated in FIGs. 2A and 2B, respectively, and respectively designated by reference numbers 200 and 202. The concentrator 200 is referred to as a "fat-and-slim concentrator". The concentrator 202 is referred to as a "banded concentrator". Each of the concentrators 200, 202, includes 24 crosspoints, as represented in FIGs. 2A and 2B by crosspoints 204.

For purposes of example herein, the fat-and-slim concentrator 200 illustrated in FIG. 2A will be used. In general, to construct a $pxq$ fat-and-slim concentrator, its input set $I$ ($|I| = p$) is partitioned into two sets $I_1$ and $I_2$, where $|I_1| = p-q$ and $|I_2| = q$ and where each of the $p-q$ inputs in $I_1$ are connected to all of the $q$ outputs and each of the $q$ inputs in $I_2$ are connected to a single but distinct output. It can be shown that every $pxq$ fat-and-slim concentrator is a sparse crossbar concentrator with a minimum number of crosspoints for any $1 \leq p \leq q$.

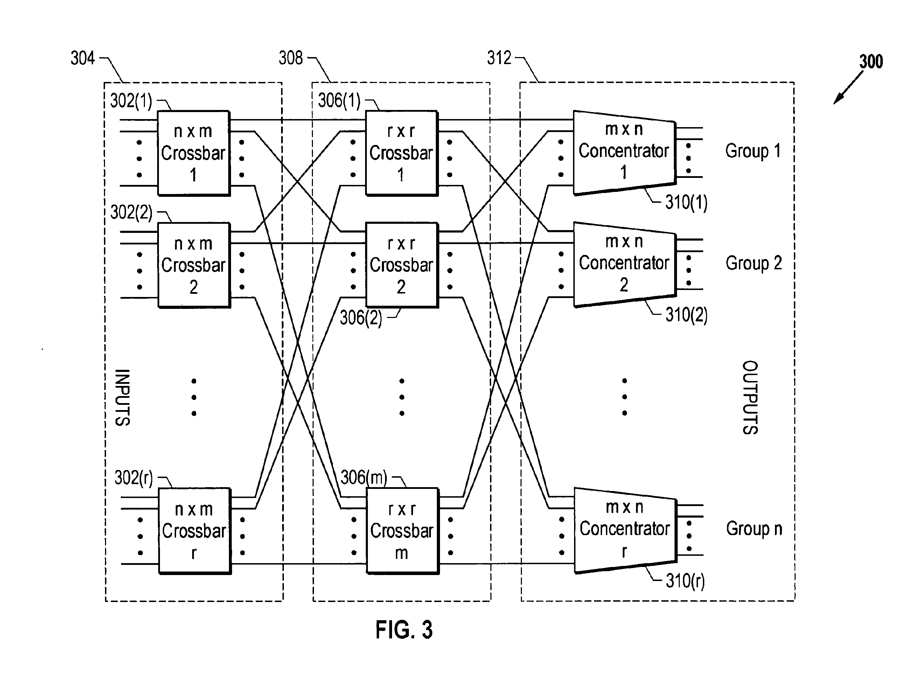

A block diagram of an embodiment of three-stage group connector 300 constructed using crossbars and concentrators is illustrated in FIG. 3. Because the structure of the group connector 300 is determined by three parameters $m$, $n$, and $r$, it is denoted by $g(m,n,r)$. In particular, the group connector 300 includes $r$ $nxm$ crossbar switch modules 302(1)-302(r) in an input stage 304, $m$ $rxr$ crossbar switch modules 306(1)-306(m) in a middle stage 308, and $r$ $m \times n$ concentrator switch modules 310(1)-310(r) in an output stage 312, wherein $n = nr$ and $m \geq n$ and $n$ is the group size. Note that the structure of the group connector 300 is similar to that of a three-stage Clos network ($m,n,r$), except that the output stage 312 comprises concentrators instead of crossbar switches. The group connector 300 is non-blocking for connecting any $n$ inputs to a group at the output of the connector if $m \geq 2n$-1.

In general, the number of crosspoints of a network is a representative measure of network cost. The number of crosspoints of a non-blocking three-stage group connector, such as the group connector 300, will now be calculated. Recall that an $n_1xn_2$ crossbar has $n_1n_2$ crosspoints, while an $n_1xn_2$ concentrator has $(n_1-n_2+1)n_2$ crosspoints. Thus, for a non-blocking group connector $g(m,n,r)$, the number of crosspoints is:

$$rnm + mrr + r(m-n+1)n \tag{1}$$

Non-Blocking Multistage Group Connectors

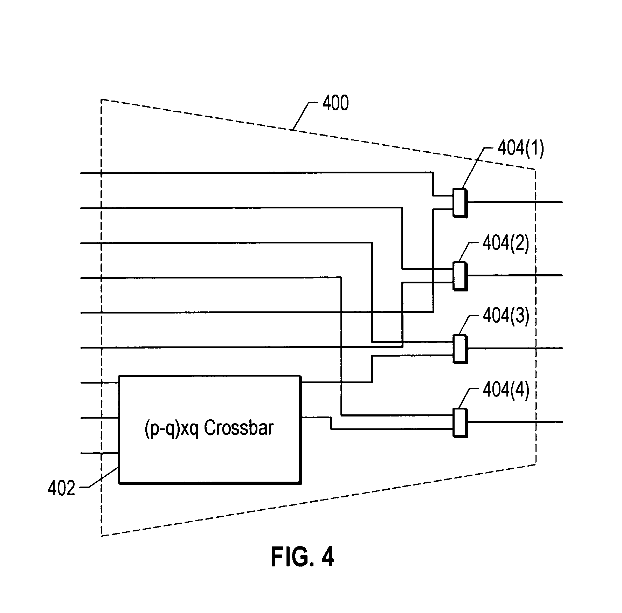

To reduce network cost, the three-stage group connector 300 illustrated in FIG. 3 can be generalized to a non-blocking multistage group connector as follows. First, a $pxq$ fat-and-slim concentrator is implemented using a $(p-q)xq$ crossbar switch and $q$ 2x1 switches. A 9x4 fat-and-slim concentrator 400 implemented in this manner is illustrated in FIG. 4. The concentrator 400 includes a 5x4 crossbar switch 402 and four 2x1 switches 404(1)-404(4).

To construct the non-blocking multistage group connector, every crossbar switch module 302(1)-302(r), 306(1)-306(m), in every stage 304, 308, 312, of the three-stage group connector 300 is recursively replaced by a three-stage group connector $g(m,n,r)$ that has the same size as the crossbar switch module being replaced. The following discussion addresses how to determine the parameters of the three-stage network that replaces an $N_1xN_2$ crossbar to achieve a minimum cost, where $N_1$ is not necessarily equal to $N_2$.

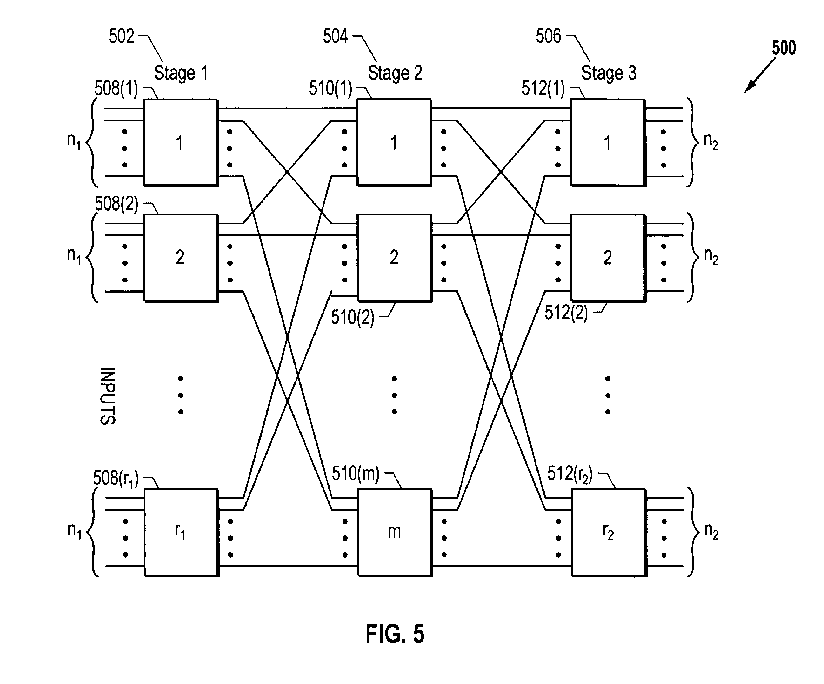

FIG. 5 is a block diagram of a general $N_1xN_2$ three-stage network 500 with five parameters, denoted $v(m,n_1, r_1,n_2,r_2)$, where $N_1 = n_1xr_1$ and $N_2 = n_2xr_2$. In particular, the network 500 includes a first stage 502, a second stage 504, and a third stage 506. The first stage 502 comprises $r_1$ crossbar switches 508(1)-508($r_1$), the second stage 504 comprises $m$ crossbar switches 510(1)-510($m$), and the third stage 506 comprises $r_2$ crossbar switches 512(1)-512($r_2$). A condition that must be met for the network 500 to be non-blocking for any one-to-one connections is that the number of middle stage switches $m$ satisfies the following:

$$m \geq (n_1 + n_2 - 1) \qquad (2)$$

Therefore, the number of crosspoints in a non-blocking $N_1 \times N_2$ $v(m,n_1,r_1,n_2,r_2)$ network can be calculated as follows:

$$n_1 \times m \times r_1 + m \times r_1 \times r_2 + m \times n_1 \times r_2$$

$$= (N_1 + N_2)m + m \times r_1 \times r_2$$

$$= m(r_1 \times r_2 + N_1 + N_2)$$

$$= (n_1 + n_2 - 1)((N_1 \times N_2)/(n_1 \times n_2) + N_1 + N_2) \qquad (3)$$

It can be shown that when

$$n_1 = n_2 = ((N_1 \times N_2)/(N_1 + N_2))^{\frac{1}{2}} \qquad (4)$$

an $N_1 \times N_2$ three-stage non-blocking network achieves the minimum number of crosspoints, which is:

$$2(N_1 + N_2)[2((N_1 \times N_2)/(N_1 + N_2))^{\frac{1}{2}} - 1] \qquad (5)$$

Thus, for any $N_1 \times N_2$ crossbar switch, based on equations (4) and (2), an $N_1 \times N_2$ three-stage non-blocking network with a minimum cost can be constructed.

In the following, a nine-stage group connector is used as an example to illustrate how to calculate the crosspoints of a non-blocking multistage group connector. A similar method can be used for any $3k$-stage non-blocking group connector with $k > 1$,

A nine-stage group connector is realized by replacing each switch in a three-stage group connector by a same-size three-stage network. Since the first stage of the original three-stage network consists of $r$ $nxm$ switches, after replacing each such switch with an $nxm$ three-stage network, according to equation (5), there are

$$r[2 (n + m)(2((n \times n)/(n + m))^{\frac{1}{2}} - 1)]$$

$$= 2r(2(n \times m (n + m))^{\frac{1}{2}} - n - m) \qquad (6)$$

crosspoints in the first three stages of the nine-stage group connector.

Similarly, since the second stage of the original three-stage network consists of $m$ $rxr$ switches, after replacing each such switch with an $rxr$ three-stage network, according to equation (5), there are

$$m[2® + r) (2((r \times r)/(r + r))^{\frac{1}{2}} - 1)]$$

$$= 4mr(2r)^{\frac{1}{2}} - 1 \qquad (7)$$

crosspoints in stages four, five, and six of the nine-stage group connector.

Finally, since the last stage of the original three-stage network consists of $r$ $(m-n)xn$ switches and $rn$ $2x1$ switches, after replacing each $(m-n)xn$ switch with an $(m-n)xn$ three-stage group connector, according to equation (5), there are

$$r[2(m - n + n) (2(((m-n)n)/(m - n + n))^{\frac{1}{2}} - 1) + 2n]$$

$$= 2r(2(m \times n (m - n))^{\frac{1}{2}} + n - m) \qquad (8)$$

crosspoints in the last three stages of the nine-stage group connector. By combining equations (6), (7), and (8), the total number of crosspoints of the nine-stage group connector is

$$2r(2(n \times m(n+m))^{\frac{1}{2}} - n - m) + 4mr((2r)^{\frac{1}{2}} - 1) + 2r(2(m \times n(m-n))^{\frac{1}{2}} + n - m)$$

$$= 4r[m \times n(m+n) + m \times n(m-n) + m(2r)^{\frac{1}{2}} - 2m] \qquad (9)$$

Under certain conditions, a three-stage group connector can be recursively transformed into a multi-stage group connector consisting of 2 x 2 switches.

### REARRANGEABLY NON-BLOCKING GROUP CONNECTORS

A group connector is rearrangeably non-blocking if it can realize all possible connections between the inputs and any groups of outputs, where the rearrangement to existing connections is permitted.

### Rearrancreably Non-Blocking Three-Stage Group Connectors

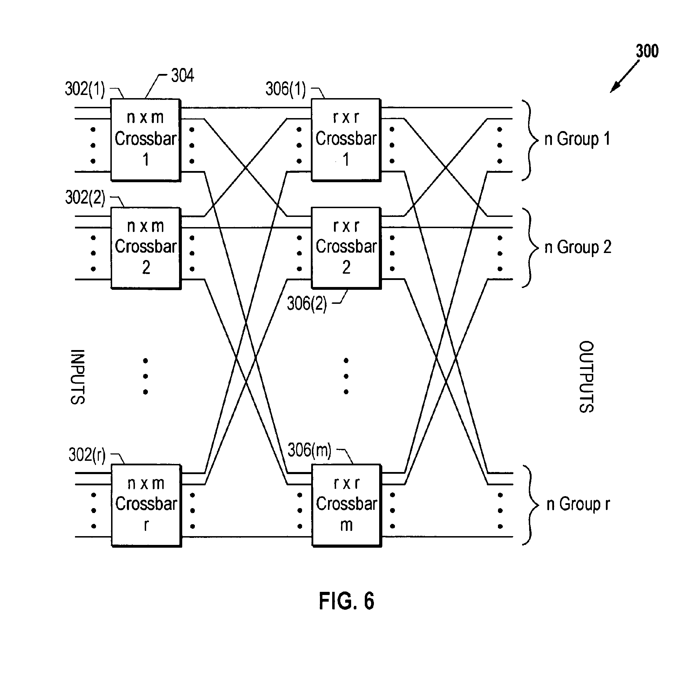

A three-stage g($m,n,r$) network is rearrangeably non-blocking for connecting any n inputs to a group at the output of the network, if the number of middle stage switches $m$ . $n$. It will be recognized that a three-stage Clos network is rearrangeably non-blocking for permutations if $m \geq n$. In a $g(m,n,r)$, since there is no need to distinguish the outputs in a group, concentrators are used in the third stage. Thus, the connections can be rotated the same way as a permutation at the first two stages and then concentrated to each group through concentrators. In fact, if the minimum value of m is considered, the concentrators at the output stage become $n$ x $n$ concentrators. In this case, a two-stage rearrangeably non-blocking group connector is obtained by simply removing the concentrators of the group connector 300 (FIG. 3), the result of which is illustrated in FIG. 6. Thus, for a three-stage rearrangeably non-blocking group connector, the number of crosspoints is

$$r \text{ x } n \text{ x } m + m \text{ x } r \text{ x } r \qquad (10)$$

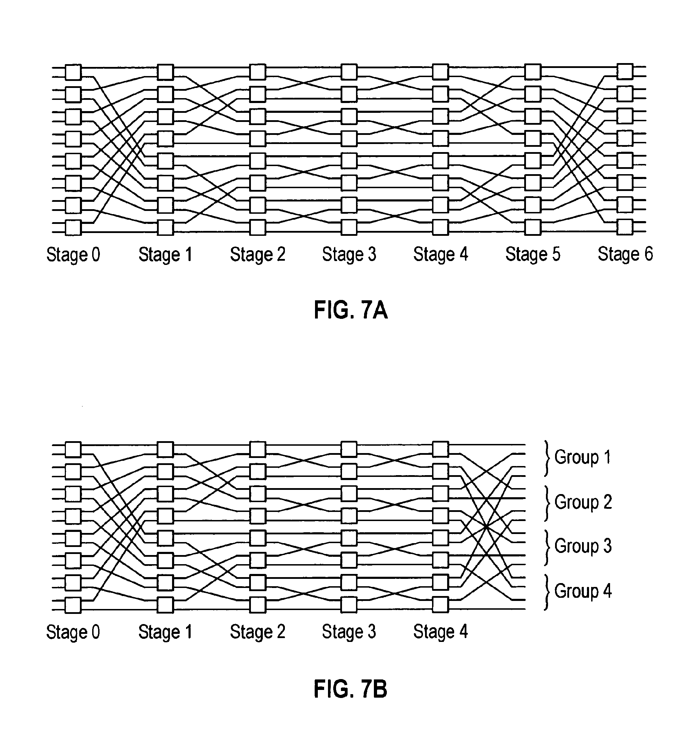

Rearrangeably Non-Blocking Multistage Group Connectors
Similar to permutation networks, the rearrangeably non-blocking three-stage group connector can be generalized to a multi-stage group connector. In particular, a group connector can be constructed from a Benes network of the same size. FIGs. 7A and 7B illustrate construction of a 16 x 16 group connector of group size 4, designated in FIG. 7B by a reference numeral 700, from a 16 x 16 Benes network, designated in FIG. 7A by a reference numeral 710. That the network illustrated in FIG. 7B is a group switch of group size 4 can be verified by setting all switches to strait connections in stages 5 and 6 of the Benes network 710. In general, an $N$ x $N$ ($N = 2^m$) group connector of group size $2^k$ ($k < m$) can be obtained by setting all switches in stages $2m$ - 2, $2m$ - 3, ... , $2m$ - ($k$ + 1) to straight connections and removing these switches. Since a Benes network can realize all possible permutations between the network inputs and outputs, the network constructed in this manner can realize all possible group connections from network inputs to network outputs.
Clearly, an N x N multi-stage group connector of size $2^k$ has crosspoints

$$(2 \log N - 1 - k) (N/2 \text{ x } 2 \text{ x } 2) \qquad (11)$$

NETWORK COST COMPARISONS

The network cost of a one embodiment of a group connector as described hereinabove can be compared with the corresponding permutation network to determine how much can be saved on crosspoints. It will be recalled that for a three-stage permutation network $v$ ($m, n, r$), the number of crosspoints is

$$r \text{ x } n \text{ x } m + m \text{ x } r \text{ x } r + r \text{ x } m \text{ x } n \qquad (12)$$

Since a three-stage non-blocking group connector $g(m, n, r)$ has

$$r \times n \times m + m \times r \times r + r(m - n + 1)n$$

crosspoints, the savings in crosspoints by using an $N \times N$ non-blocking group connector as opposed to a permutation network is

$$r \times n(n - 1) = N(n - 1) \tag{13}$$

Since a three-stage rearrangeably non-blocking group connector has

$$r \times n \times m + m \times r \times r$$

crosspoints, compared with a three-stage permutation network, the savings in crosspoints using a three-stage $n \times n$ rearrangeably non-blocking group connector is

$$r \times n^2 = N \times n \tag{14}$$

A multi-stage group connector will now be considered. For a non-blocking multi-stage network, a nine-stage group connector is used as an example. It will be recognized that a nine-stage permutation network and a nine-stage group connector differ only in their last three stages and the cost of the last three stages of the permutation network is given in equation (6) and that of the group connector given in equation (8). Thus, the savings in crosspoints for a nine-stage group connector, compared with a nine-stage permutation network is

$$2r(2(n \times m(n+m))^{\frac{1}{2}}-n-m)-2r(2(m \times n(-n))^{\frac{1}{2}}+n-m)$$

$$= 2r[2(n(2n-1)(3n-1))^{\frac{1}{2}}-3n+1]-2r[2(n(2n-1)(n-1))^{\frac{1}{2}}-n+1]$$

$$= 4r[(n(2n-1)(3n-1))^{\frac{1}{2}}-((2n-1)(n-1))^{\frac{1}{2}}-n \tag{15}$$

Finally, since a $n \times n$ Benes network has

$$(2 \log N - 1) (N/2 \times 2 \times 2) = 2N(2 \log N - 1)$$

crosspoints, while an $N \times N$ multi-stage rearrangeable group connector of size $2k$ has

$$(2 \log N - 1 - k) (N/2 \times 2 \times 2)$$

crosspoints, the savings in crosspoints by using an $N \times N$ multi-stage group connector of size $2^k$ is

$$2N \times k \tag{16}$$

From the above analysis, it is apparent that for applications that do not require the order of outputs within a group to be distinguished, a group connector can be used to reduce the network cost. For example, assuming an application with 1024 inputs/outputs and a group size of eight, by replacing a 1024 x 1024 Benes network with a group connector of the same size, 8/19, or 42%, of the crosspoints can be eliminated.

In summary, a class of interconnection networks called group connectors have been described which have important application in constructing client-server connections, DWDM add/drop cross-connects, and switching matrices for DWDM routers. It has been demonstrated that the cost of such group connectors, in terms of crosspoints, is significantly lower than that of permutation networks. The embodiments described herein are particularly useful for ingress routers for DWDM networks operating in slot transmission mode, in which input packets with the same destination are assembled into larger, fixed-length frames, each corresponding to a time-slot, at ingress line cards ("ILCs"). All $N$ input requests are given simultaneously for switching and unnecessary connection conflicts can be avoided by properly controlling the switching elements. The amortized overhead in routing and forwarding of frames can be much smaller than that for switching individual packets.

The following methods or apparatus or method steps or apparatus features, separately or in combination, also constitute advantageous embodiments of the invention:

- A method of constructing an $N_1 \times N_2$ multistage group connector with $N_1$ inputs and $N_2$ outputs from a three-stage group connector, wherein the three-stage group connector comprises a first stage comprising $r$ $n \times m$ crossbar switch modules, a second stage comprising $m$ $r \times r$ crossbar switch modules, and a third stage comprising $r$ $m \times n$ concentrator switch modules, the method comprising: replacing each of the $r$ $r \times m$ crossbar switch modules of the first stage with a three-stage group connector of the same size as the $r \times m$ crossbar switch module; and replacing each of the $m$ $r \times r$ crossbar switch modules of the second stage with a three-stage group connector of the same size as the $r \times r$ crossbar switch module;

- The described method further comprising: implementing each concentrator of the third stage using a $p \times q$ fat-and-slim concentrator;

- An $N \times N$ multi-stage group connector with $N$ inputs and $N$ outputs, wherein the $N$ outputs are divided into r output groups, each group including $n$ outputs such that $r = N/n$, the connector comprising: a first portion comprising $r$ $n \times m$ three-stage group connectors, wherein $m \geq n{-}1$; a second portion comprising $m$ $r \times r$ three-stage group connectors; and a third portion comprising $r$ $p \times q$ fat and slim concentrator switch modules;

- The described group connector wherein each of the concentrators includes a minimum number of crosspoints;

- The described group connector wherein each of the concentrators includes a maximum of $(m{-}n{+}1)n$ crosspoints;

- The described group connector wherein m $\geq$ n;

- The described group connector wherein the group connector is non-blocking;

- The described group connector wherein m $\geq$ 2n-1;

- An $N \times N$ two-stage group connector with $N$ inputs and $N$ outputs, wherein the $N$ outputs are divided into $r$ output groups, each group including $n$ outputs such that $r = N/n$, the group connector comprising: a first stage comprising $r$ $n \times m$ crossbar switch modules; and a second stage comprising $m$ $r \times r$ crossbar switch modules; wherein $m$ is equal to $2n{-}1$;

- The described group connector wherein the group connector is non-blocking;

- A method of constructing an $N \times N$ group connector of group size $2^k$ from an $N \times N$ Benes network, the method comprising: setting all switches in stages $2m{-}2$, $2m{-}3$, ... $2m{-}(k{+}1)$ of the Benes network to straight connections; and removing all switches in stages $2m{-}2$, $2m{-}3$, ... $2m{-}(k{+}1)$ of the Benes network;

- The described method wherein $N$ is equal to $2^m$;

- The described method wherein $k$ is less than or equal to $m$;

- The described method wherein $N$ is equal to $2^m$ and $k$ is less than or equal to $m$.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

**Claims**

1. An *NxN* three-stage group connector with *N* inputs and *N* outputs, wherein the *N* outputs are divided into r output groups, each group including *n* outputs such that $r = N/n$, the connector comprising:

   a first stage comprising *r nxm* crossbar switch modules;
   a second stage comprising *m rxr* crossbar switch modules; and
   a third stage comprising *r mxn* concentrator switch modules.

2. The group connector of claim 1 wherein the first stage comprises an input stage.

3. The group connector of claim 1 wherein the third stage comprises an output stage.

4. The group connector of claim 1 wherein the second stage is a middle stage disposed between the first and third stages.

5. The group connector of claim 1 wherein each of the concentrators includes a minimum number of crosspoints.

6. The group connector of claim 1 wherein each of the concentrators is of a type selected from a group consisting of a fat-and-slim concentrator and a banded concentrator.

7. The group connector of claim 1 wherein each of the concentrators includes a maximum of $(m\text{-}n+1)n$ crosspoints.

8. The group connector of claim 1 wherein $m \geq n$.

9. The group connector of claim 1 wherein the group connector is non-blocking.

10. The group connector of claim 1 wherein $m \geq 2n\text{-}1$.

100

106(1)
102(1)
110
112(1)
108(1)

ILC₁ — $Ch_1$, $Ch_2$, ⋮, $Ch_{N/n-1}$, $Ch_{N/n}$ — 104(1)

OLC₁

106(2)
102(2)
ILC₂

112(2)
108(2)

OLC₂ — $Ch_1$, $Ch_2$, ⋮, $Ch_{N/n-1}$, $Ch_{N/n}$ — 104(2)

106(3)
102(3)
ILC₃

112(N/n)
108(N/n)

106(N)
102(N)
ILC_N

OLC_{N/n} — $Ch_1$, $Ch_2$, ⋮, $Ch_{N/n-1}$, $Ch_{N/n}$ — 104(N/n)

## FIG. 1

200

INPUTS
204
204
204
204

OUTPUTS

## FIG. 2A

202

INPUTS
204
204
204
204

OUTPUTS

## FIG. 2B

FIG. 3

EP 1 549 102 A2

FIG. 4

FIG. 5

FIG. 6

Stage 0    Stage 1    Stage 2    Stage 3    Stage 4    Stage 5    Stage 6

**FIG. 7A**

Stage 0    Stage 1    Stage 2    Stage 3    Stage 4

} Group 1

} Group 2

} Group 3

} Group 4

**FIG. 7B**